(19) Europäisches Patentamt European Patent Office Office européen des brevets

(11) **EP 2 274 148 B1**

(12) **EUROPEAN PATENT SPECIFICATION**

(45) Date of publication and mention
of the grant of the patent:
**23.05.2012 Bulletin 2012/21**

(21) Application number: **08869776.8**

(22) Date of filing: **19.12.2008**

(51) Int Cl.:
*C08J 9/00* *(2006.01)*     *B29C 47/00* *(2006.01)*
*C08K 3/00* *(2006.01)*     *C08L 23/10* *(2006.01)*

(86) International application number:
**PCT/US2008/087559**

(87) International publication number:
**WO 2009/088700 (16.07.2009 Gazette 2009/29)**

(54) **CELLULAR ORIENTED POLYMER COMPOSITION WITH INORGANIC FILLER AND LOW XYLENE SOLUBLES**

ZELLULARE AUSGERICHTETE POLYMERZUSAMMENSETZUNG MIT ANORGANISCHEM FÜLLER UND GERINGEM XYLOL-LÖSLICHEN ANTEIL

COMPOSITION POLYMÈRE CELLULAIRE ORIENTÉE COMPORTANT UNE CHARGE INORGANIQUE ET CARACTÉRISÉE PAR UNE FAIBLE TENEUR DE MATIÈRES SOLUBLES DANS LE XYLÈNE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **08.01.2008 US 19616 P**

(43) Date of publication of application:
**19.01.2011 Bulletin 2011/03**

(73) Proprietor: **Eovations, LLC Grand Rapids, MI 49525 (US)**

(72) Inventors:
• **NICHOLS, Kevin, L. Freeland MI 48623 (US)**

• **KAARTO, John Missouri City TX 77459 (US)**
• **CROWN, Alechia Pear Land TX 77584 (US)**
• **FINLAYSON, Malcolm, F. Houston TX 77008 (GB)**

(74) Representative: **Raynor, John et al Beck Greener Fulwood House 12 Fulwood Place London WC1V 6HR (GB)**

(56) References cited:
WO-A-02/38383          WO-A-2005/035598
WO-A-2008/121464     US-A1- 2005 272 858

**Description**

<u>Cross Reference Statement</u>

This application claims the benefit of U.S. Provisional Application No. 61/019,616, filed January 8, 2008.

BACKGROUND OF THE INVENTION

<u>Field of the Invention</u>

The present invention relates to a cavitated oriented polymer composition and a solid state drawing method for preparing the oriented polymer composition.

<u>Description of Related Art</u>

Oriented polymer compositions (OPCs) are replacing wooden materials in construction applications such as decking. OPCs offer greater durability and weatherability than wooden materials. Polypropylene is a particular polymer of interest due to its high temperature stability, durability, chemical resistance, high flexural modulus, relatively low density and cost.

OPCs containing polypropylene are not new. However, there is a continuing challenge to simultaneously increase the flexural modulus while decreasing the density of a polypropylene OPC. Maximizing flexural modulus is desirable to minimize deflection of an OPC board when under load. Deflection under load is undesirable in construction applications such as in decking floor boards where deflection can cause a sense of instability, bounce and sponginess to the deck. Increasing stiffness in an OPC board will reduce the likelihood of deflection under load and can enable use of thinner boards while still avoiding deflection under load. Minimizing density is desirable for ease of shipping and handling. Reducing the density of OPC boards may also preclude a current need to pre-drill holes in OPC boards prior to screwing or nailing them onto a support.

One major challenge is that flexural modulus and density tend to be directly related. Decreasing the density of an OPC typically also reduces the flexural modulus of the OPC. Therefore, OPC properties must be a compromise between maximizing flexural modulus and minimizing density. It is desirable to find a way to allow for greater flexural modulus at lower density than is currently possible.

One approach to increasing flexural modulus is by selecting a polypropylene that orients to a particularly stiff composition. Highly crystalline polypropylene polymers are recent developments that offer high stiffness, but are also difficult to process into oriented materials (*see*, for example, United States patent (USP) 7,282,539, particularly at column 2, lines 18-22).

USP 7,282,539 ('539) attempts to overcome the difficulties of using highly crystalline polypropylene polymers in preparing biaxially oriented polypropylene films but is only able to incorporate up to 95 percent (%) highly crystalline polypropylene. '539 is silent on any effect highly crystalline polypropylene polymers have on the relationship between density and flexural modulus for OPCs. Moreover, '539 is absent of any discussion of oriented polymer compositions that are more complex than films, such as thicker and cellular OPCs, let alone any affect highly crystalline polypropylene has on cellular OPCs.

USP 5,474,722 ('722) discloses OPCs containing cellulosic fillers such as wood flour and wood fiber. The cellulosic fillers contain moisture which serves as a blowing agent to foam a polymer composition upon forming a polymer billet prior to drawing the polymer billet. Drawing the foamed polymer billet results in an OPC that has a relatively low density and relatively high flexural modulus. The low density is a result of a combination of the foamed cellular structure of the OPC and low density cellulosic filler. '722 identifies the importance of cellulosic filler in achieving this desirable combination of relatively low density and relatively high modulus. In Example 9, for instance, '722 notes that mica-containing OPCs have a higher density than cellulose-containing OPCs because mica has a density twice that of cellulose. Additionally, mica does not contain moisture to serve as a blowing agent in manufacturing the OPC. These two drawbacks to achieving low density OPCs in the manner of '722 are common with inorganic fillers. Despite the drawbacks to using inorganic fillers in OPC manufacturing, there are advantages to using inorganic fillers. For example, inorganic fillers are less likely to degrade, bleach or absorb moisture as readily as cellulosic fillers.

There remains a need to find a way to simultaneously lower density and increase flexural modulus in polypropylene OPCs that contain inorganic fillers.

BRIEF SUMMARY OF THE INVENTION

The present invention surprisingly provides a polypropylene OPC that contains ten volume-percent (vol%) or more inorganic filler based on total OPC volume and yet achieves both a density of 0.85 grams per cubic centimeters (g/cc) or less and a flexural modulus of 4137 megaPascals (600,000 pounds per square inch (psi)) or more.

Yet more surprising, a particularly desirable embodiment of the present invention surprisingly provides such an OPC wherein greater than 95 weight-percent (wt%) of the polymers in the OPC are highly crystalline polypropylene polymers. The OPCs of the present invention have a particularly high flexural modulus relative to OPCs at the same density made of other (conventional) polypropylene polymer compositions.

Even more surprising and desirable, OPCs of the present invention containing greater than 95 wt% highly crystalline polypropylene achieve higher cavitation void volumes than similarly prepared OPCs containing conventional polypropylene polymers, indicating that the highly crystalline polypropylene is particularly well suited for cavitation.

Still more surprising is that OPCs of the present invention containing more than 95 wt% highly crystalline polypropylene achieve higher flexural modulus-to-density ratios than OPCs made with conventional polypropylene polymers. Typically increasing flexural modulus requires increasing density and decreasing density results in a decrease in flexural modulus. Use of greater than 95 wt% HCPP in the OPCs of the present invention is able to advance the art by simultaneously increasing flexural modulus while achieving a low density relative to that which is achievable using conventional polypropylenes.

In a first aspect, the present invention is a cellular oriented polymer composition comprising one or more orientable polymer and having a density of 0.85 grams per cubic centimeter or less, a flexural modulus of 4137 mega-Pascals (600,000 pounds per square inch) or more and all cross sectional dimensions of three millimeters or greater, wherein the cellular oriented polymer composition comprises 50 weight-percent or more polypropylene-based polymers and four weight-percent or less of a combination of polypropylene xylene solubles and ethylene/propylene copolymer xylene solubles with weight-percent based on total polymer weight in the cellular oriented polymer composition and ten or more volume-percent inorganic filler based on total cellular oriented polymer composition volume.

Particular embodiments of the first aspect include any one or any combination of more than one of the following characteristics: more than 95% by weight of all polymers in the oriented polymer composition are highly crystalline polypropylene polymers; the polypropylene-based polymers have a molecular weight distribution of six or less (preferably five or less), are nucleated homopolymers, or both; filler accounts for 20 volume percent or more of the total cavitated oriented polymer composition volume; all of the filler in the oriented polymer composition is inorganic; the oriented polymer composition has one percent by weight or less of a combination of polypropylene xylene solubles and ethylene/propylene copolymer xylene solubles based on total weight of polymer in the cellular oriented polymer composition; the cellular oriented polymer composition contains void volume and greater than 50% of the void volume is cavitated void volume; and the cellular oriented polymer composition contains four weight-percent or less of a combination of polypropylene xylene solubles and ethylene/propylene copolymer xylene solubles with weight-percent based on total polypropylene weight in the cellular oriented polymer composition.

In a second aspect, the present invention is a process for preparing a cellular oriented polymer composition comprising the steps: (a) providing an orientable polymer composition having a softening temperature and at a drawing temperature between 0°C and 50°C below its softening temperature; (b) tensile drawing the orientable polymer composition thereby inducing orientation of the orientable polymer composition to form a cellular oriented polymer composition; and (c) cooling the cellular oriented polymer composition; wherein the orientable polymer composition and oriented polymer composition have 50 weight-percent or more polypropylene-based polymers and four weight-percent or less of a combination of polypropylene xylene solubles and ethylene/propylene copolymer xylene solubles based on total weight of polymer in the orientable polymer composition and cellular oriented polymer composition, and wherein the cellular oriented polymer composition has an inorganic filler content of ten or more volume percent based on total orientable polymer composition volume, a density of 0.85 grams per cubic centimeter or less and a flexural modulus of 4137 megaPascals (600,000 pounds per square inch) or more..

Particular embodiments of the second aspect include any one or any combination of more than one of the following characteristics: the polypropylene-based polymer is selected from a group of polypropylene-based polymers consisting of polypropylene-based polymers having a molecular weight distribution of six or less, polypropylene-based homopolymers that are nucleated, and polypropylene-based homopolymers both having a molecular weight distribution of six or less and that are nucleated; drawing in step (b) induces cavitation in the oriented polymer composition; the orientable polymer composition in step (a) is free of cells, cavities and voids; all of the filler is inorganic filler; the inorganic filler accounts for 20 volume percent or more of the cellular oriented polymer composition volume; the orientable polymer composition and cellular oriented polymer composition have one percent by weight or less of a combination of polypropylene xylene solubles and ethylene/propylene copolymer xylene solubles based on total polymer weight; all cross sectional dimensions of the oriented polymer composition are three millimeters or more; and the orientable polymer composition and cellular oriented polymer composition each contains four weight-percent or less of a combination of polypropylene xylene solubles and ethylene/propylene copolymer xylene solubles with weight-percent based on total polypropylene weight in the composition being analyzed.

The process of the present invention is useful for preparing the cellular OPC of the present invention. The OPC of the present invention is useful, for example, as decking boards, deck railings, siding, fencing, exterior trim and any other building material where wood is currently used, especially outdoor applications.

## DETAILED DESCRIPTION OF THE INVENTION

Definitions

"Polypropylene OPC" is an OPC wherein at least 50 weight-percent (wt%) of all polymers in the OPC are polypropylene-based. A polymer is "polypropylene-based" (or "polypropylene") if more than 50 wt% of the monomer units comprising the polymer are polymerized polypropylene.

"Polypropylene xylene solubles" is interchangeable with "PP xylene solubles", and "PPXS". PPXS are components that are soluble in xylene and that contain polymerized propylene units. For the present invention, PPXS primarily refers to atactic polypropylene, stereoblock polypropylene (molecules of isotactic containing stereodefects containing segmented isotactic portions of polypropylene to a degree that the molecule is soluble in xylene under PPXS measurement conditions), low weight-averaged molecular weight polypropylene including isotactic polypropylene and oligomers of propylene.

"Ethylene/propylene copolymer xylene solubles" is interchangeable with "E/P-XS". E/P-XS are components that are soluble in xylene and that contain both ethylene and propylene units polymerized into the component. E/P-XS copolymers include oligomers.

"Highly crystalline polypropylene" ("HCPP") is a polypropylene-based polymer ("polypropylene") having 4.0 wt% or less, preferably 3.5 wt% or less, more preferably 3.0 wt% or less, still more preferably 2.0 wt% or less, even more preferably 1.0 wt% or less, yet more preferably 0.5 wt% or less and most preferably zero percent of a combination of polypropylene xylene solubles and ethylene/propylene copolymer xylene solubles based on total HCPP weight. Determine percent PPXS and E/P-XS according to ASTM method D5492-06 but only consider components that qualify as PPXS and E/P-XS in determining the percent PPXS and E/P-XS. In other words, do not include in percent PPXS and E/P-XS any contribution by xylene soluble components that are not polymers or oligomers of propylene or ethylene/ propylene copolymers. HCPP is also identifiable by isotactic index. The percentage by weight of the polymer insoluble in xylene is the polymer's isotactic index (*that is,* isotactic index = 100%-(wt% of PPXS and E/P-XS)).

"Solid state" refers to a polymer (or polymer composition) that is at a temperature below the softening temperature of the polymer (or polymer composition). Hence, "solid state drawing" refers to drawing a polymer or polymer composition that is at a temperature below the softening temperature of the polymer (or polymer composition).

"Polymer composition" comprises a continuous polymer phase containing at least one polymer component and can contain non-polymeric components.

"Softening temperature" ($T_s$) for a polymer or polymer composition having as polymer components only one or more than one semi-crystalline polymer is the melting temperature for the polymer composition.

"Melting temperature" ($T_m$) for a semi-crystalline polymer is the temperature half-way through a crystalline-to-melt phase change as determined by differential scanning calorimetry (DSC) upon heating a crystallized polymer at a specific heating rate. Determine $T_m$ for a semi-crystalline polymer according to the DSC procedure in ASTM method E794-06. Determine $T_m$ for a combination of polymers and for a filled polymer composition also by DSC under the same test conditions in ASTM method E794-06. If the combination of polymers or filled polymer composition only contains miscible polymers and only one crystalline-to-melt phase change is evident in its DSC curve, then $T_m$ for the polymer combination or filled polymer composition is the temperature half-way through the phase change. If multiple crystalline-to-melt phase changes are evident in a DSC curve due to the presence of immiscible polymers, then $T_m$ for the polymer combination or filled polymer composition is the $T_m$ of the continuous phase polymer. If more than one polymer is continuous and they are not miscible, then the $T_m$ for the polymer combination or filled polymer composition is the lowest $T_m$ of the continuous phase polymers.

$T_s$ for a polymer or polymer composition having as polymer components only one or more than one amorphous polymer is the glass transition temperature for the polymer composition.

"Glass transition temperature" ($T_g$) for a polymer or polymer composition is as determined by DSC according to the procedure in ASTM method E1356-03. Determine $T_g$ for a combination of polymer and for a filled polymer composition also by DSC under the same test conditions in ASTM method E1356-03. If the combination of polymer or filled polymer composition only contains miscible polymers and only one glass transition phase change is evident in the DSC curve, then $T_g$ of the polymer combination or filled polymer composition is the temperature half-way through the phase change. If multiple glass transition phase changes are evident in a DSC curve due to the presence of immiscible amorphous polymers, then $T_g$ for the polymer combination or filled polymer composition is the $T_g$ of the continuous phase polymer. If more than one amorphous polymer is continuous and they are not miscible, then the $T_g$ for the polymer composition or filled polymer composition is the lowest $T_g$ of the continuous phase polymers.

If the polymer composition contains a combination of semi-crystalline and amorphous polymers, the softening temperature of the polymer composition is the softening temperature of the continuous phase polymer or polymer composition. If the semi-crystalline and amorphous polymer phases are co-continuous, then the softening temperature of the combination is the lower softening temperature of the two phases.

"Drawing temperature" is a temperature within a drawing temperature range at which a polymer is conditioned prior to drawing and is the temperature at which the polymer exists upon the initiation of drawing.

One of ordinary skill in the art understands that a polymer composition typically has a variation in temperature through its cross section (*that is,* along a cross sectional dimension of the composition) during processing. Therefore, reference to temperature of a polymer composition refers to an average of the highest and lowest temperature along a cross sectional dimension of the polymer composition. The temperature at two different points along the polymer cross sectional dimension desirably differs by 10% or less, preferably 5% or less, more preferably 1% or less, most preferably by 0% from the average temperature of the highest and lowest temperature along the cross sectional dimension. Measure the temperature in degrees Celsius (°C) along a cross sectional dimension by inserting thermocouples to different points along the cross sectional dimension.

A "converging die" is a die having a shaping channel with a converging profile. "Converging profile" refers to a shaping channel that reduces in cross sectional area, preferably in a streamline fashion, over at least a portion of the shaping channel when proceeding from the entrance opening of the shaping channel to the exit opening of the shaping channel. In other words, a shaping channel has a converging profile if at least one cross section of the shaping channel has a cross sectional area greater than a cross section for the shaping channel more proximate to the exit opening of the shaping channel. Preferably, any cross section of the shaping channel in a converging die has a cross sectional area that is equal to or greater than the cross sectional area of any other cross section of the shaping channel more proximate to the exit opening of the shaping channel.

"Orientation axis" and "orientation direction", in reference to an OPC, is a line through an OPC that extends in the direction of predominant polymer alignment within the OPC.

"Cross sections" herein are perpendicular to the orientation axis unless the reference to the cross section indicates otherwise. A cross section has a centroid and a perimeter that defines a shape for the cross section.

A "cross sectional dimension" is the length of a straight line connecting two points on a cross section's perimeter and extending through the centroid of the cross section. For example, a cross sectional dimension of a rectilinear four-sided polymer composition could be the height or width of the polymer composition.

"ASTM" refers to an American Society for Testing and Materials test method. The year of the method is either designated by a hyphenated suffix in the method number or, in the absence of such a designation, is the most current year prior to the filing date of this application.

Drawing Process and Oriented Polymer Composition

The process of the present invention requires providing an orientable polymer composition that has 4 weight-percent (wt%) or less of a combination of PPXS and E/P-XS based on the total weight of polymers in the orientable polymer composition, desirably of the polypropylene polymers. The OPC of the present invention also has 4 wt% or less of a combination of PPXS and E/P-XS based on the total weight of polymer in the OPC, desirably of the polypropylene polymers. Determine combined amount of PPXS and E/P-XS according to the method set forth above under the definition of highly crystalline polypropylene. To determine PPXS and E/P-XS based on polymer weight for and OPC it is desirable to first isolate the polymer component from non-polymer components in the OPC. Isolating polymer components from non-polymer components is possible by many known methods including selectively dissolving the polymer components and filtering out non-polymer components.

The orientable polymer composition, as well as an OPC of the present invention, each has a continuous orientable polymer phase. Typically, 75 weight-percent (wt%) or more, even 90 wt% or more or 95 wt% or more of the polymers in the orientable polymer composition and the OPC of the present invention are orientable polymers based on total polymer weight. All of the polymers in an orientable polymer composition and OPC of the present invention can be orientable polymers. The orientable polymer composition and the OPC of the present invention may contain a single orientable polymer or a combination of multiple orientable polymers.

An orientable polymer is a polymer that can undergo induced molecular orientation by solid state deformation (*for example*, solid state tensile drawing). An orientable polymer can be amorphous or semi-crystalline (semi-crystalline polymers have a melt temperature ($T_m$) and include those polymers known as "crystalline"). Desirable orientable polymers include semi-crystalline polymers, even more desirable are linear polymers (polymers in which chain branching occurs in less than 1 of 1,000 polymer units). Semi-crystalline polymers are particularly desirable because they result in greater increase in strength and modulus than amorphous polymer compositions after orientation. Upon orientation, semi-crystalline polymer compositions can result in 4-10 times greater increase in strength and flexural modulus over that seen with amorphous polymer compositions after orientation.

Polypropylene (PP)-based polymers are especially desirable orientable polymers in the present invention. PP-based polymers generally have a lower density than other orientable polymers. Therefore, PP-based polymers facilitate lighter articles than other orientable polymers. Additionally, PP-based polymers offer greater thermal stability than other orientable olefin polymers. Therefore, PP-based polymers may also form oriented articles having higher thermal stability than oriented articles of other polymers

The orientable polymer composition, and OPC of the present invention, contains 50 weight-percent (wt%) or more, preferably 60 wt% or more, more preferably 75 wt% or more, still more preferably 90 wt% or more, even more preferably 95 wt% or more and most preferably 100 wt% polypropylene-based polymer relative to total polymer weight in the orientable polymer composition (or OPC, depending on what is being analyzed).

The polypropylene-based polymer desirably has a "broad molecular weight distribution". In the present application, a "broad molecular weight distribution" means the the weight-averaged molecular weight (Mw) to number averaged molecular weight (Mn) ratio ("Mw/Mn" or "molecular weight distribution") of seven or less, preferably six or less, and can be five or less and desirably four or more, preferably five or more.

Ideally, the polypropylene-based polymer is nucleated. Nucleated polypropylene-based polymers are believed to contribute to a higher flexural modulus in an OPC and also lower OPC densities due to increased cavitation during tensile drawing.

A polypropylene-based polymer is "nucleated" if it contains one or more than one nucleator (which is interchangeable with terms such as "nucleator compound" and "nucleating agent" and "clarifying agent"). Nucleators generally encompass any additive to polypropylene that produces nucleation sites for polypropylene crystals from transition from its molten state to a solid, cooled structure. Without being bound by theory, nucleators may also facilitate cavitation during solid state tensile drawing of a polypropylene-based composition by inducing crystal formation, as sites for cavitation to occur, or by both mechanisms. Desirable nucleators include sodium and lithium phosphate salts (such as sodium 2,2'-methylene-bis-(4,6-di-tert-butylphenyl) phosphate (otherwise known as NA-11, available from Amfine Chemical Corp.) and aluminum hydroxybis (2,4,8,10-tetrakis (1,1-dimethyle) 6-hydroxy-12H-dibenzo[d,g][1,2,3] dioxaphophocin 6-oxidato (otherwise known as NA-21, available from Amfine Chemical Corp.)), salts of aromatic carboxylic acids (such as sodium benzoate), talc (including all grades commonly referred to as "talc"), alum, silica, titanium oxide, calcium oxide, magnesium oxide, carbon black, clay minerals and dibenzylidene sorbitol based compounds (for example Milliken MILLAD™ series products like MILLAD™ 3988, MILLAD is a trademark of Milliken & Company Corporation).

A particularly desirable orientable polypropylene is highly crystalline polypropylene (HCPP). HCPP is stiffer, stronger and more heat resistant that conventional polypropylene grades. Relative to conventional polypropylene, HCPP has a higher melting point ($T_m$ is about 161 degrees Celsius (°C) to about 168°C), higher flexural modulus, high heat distortion temperature (usually 5°C to 20°C higher), increased hardness and scratch resistance, lower shrinkage and greater creep resistance and increased solvent and corrosive liquid resistance. As noted in the Background section, HCPP is also difficult to draw into an OPC. All of the polypropylene-based polymers in the orientable polymer composition and OPC of the present invention can be HCPP. It is desirable that the orientable polymer composition for use in the process of the present invention and the OPC of the present invention contain at least 50 wt% HCPP based on total polymer weight.

Surprisingly, the orientable polymer composition and the present OPC can contain over 95 weight-percent (wt%), desirably 97 wt% or more, preferably 98 wt% or more, more preferably 99 wt% or more, even 100 wt% HCPP based on total polymer weight in the orientable polymer composition and OPC. The present invention can include more than 95 wt% HCPPs in an OPC despite prior artisans' inability to do the same.

Suitable HCPPs for use in the present invention can be polypropylene homopolymers, copolymers of propylene and ethylene or a combination of polypropylene homopolymer and propylene/ethylene copolymer. Desirably, the HCPP contains less than 2 wt%, preferably one wt% or less, more preferably 0.5 wt% or less ethylene based on total HCPP weight. Most preferably, the HCPP is polypropylene homopolymer. USP 7,087,680 (incorporated herein by reference in its entirety) describes particularly desirable HCPPs suitable for use in the present invention.

Suitable PP-based polymers that can be used in combination with HCPP to prepare orientable polymer compositions suitable for use it the present invention include Zeigler Natta, metallocene and post-metallocene polypropylenes. Suitable PP-based polymers include PP homopolymer; PP random copolymer (with ethylene or other alpha-olefin present from 0.1 to three percent by weight of monomers); PP impact copolymers with either PP homopolymer or PP random copolymer matrix of 50-97 percent by weight (wt%) based on impact copolymer weight and with ethylene propylene copolymer rubber present at 3-50 wt% based on impact copolymer weight prepared in-reactor or an impact modifier or random copolymer rubber prepared by copolymerization of two or more alpha olefins prepared in-reactor; PP impact copolymer with either a PP homopolymer or PP random copolymer matrix for 50-97 wt% of the impact copolymer weight and with ethylene-propylene copolymer rubber present at 3-50 wt% of the impact copolymer weight added via compounding, or other rubber (impact modifier) prepared by copolymerization of two or more alpha olefins(such as ethylene-octene)by Zeigler-Natta, metallocene, or single-site catalysis, added via compounding such as but not limited to a twin screw extrusion process. Suitable combination ratios with HCPP are those that provide a total combination of PPXS and E/P-XS for the total polymer, preferably based on the polypropylene polymer component, that is 4 wt% or less, preferably 3 wt% or less, more preferably 2 wt% or less, still more preferably one wt% or less, and most preferably zero.

PP-based polymers can be ultra-violet (UV) stabilized, and desirably can also be impact modified. Particularly desirable PP-based polymers are stabilized with organic stabilizers. The PP-based polymer can be free of titanium dioxide pigment to achieve UV stabilization thereby allowing use of less pigment to achieve any of a full spectrum of colors. A combination of low molecular weight and high molecular weight hindered amine-type light stabilizers (HALS) are desirable additives to impart UV stabilization to PP-based polymers. Suitable examples of commercially available stabilizers include IRGASTAB™ FS 811, IRGASTAB™ FS 812 (IRGASTAB is a trademark of Ciba Specialty Chemicals Corporation). A particularly desirable stabilizer system contains a combination of IRGASTAB™ FS 301, TINUVIN™ 123 and CHIMASSORB™ 119. (TINUVIN and CHIMASSORB are trademarks of Ciba Specialty chemicals Corporation).

Suitable orientable polymers that can be present in combination with polypropylene in the orientable polymer composition and OPC include polymers and copolymers of polystyrene, polycarbonate, polypropylene, polyethylene (including both high density polyethylene and copolymers of alpha olefins and ethylene), polymethylpentane, polytetrafluoroethylene, polyamides, polyesters such as polyethylene terephthalate and polybutylene terephthalate, polycarbonates, polyethylene oxide, polyoxymethylene, polyvinylchloride and blends thereof. Particularly desirable orientable polymers include polyethylene, polypropylene, polyvinylchloride and polyesters. More particularly desirable orientable polymers include linear polyethylene and ethylene-alpha olefin copolymers each having a weight-average molecular weight from 50,000 to 3,000,000; especially from 100,000 to 1,500,000, even from 750,000 to 1,500,000. Polyvinylidene fluoride polymers having a weight-average molecular weight of from 200,000 to 800,000, preferably 250,000 to 400,000 are also suitable.

A further surprising discovery with the present invention is that orientable polymer compositions that have 4 wt% or less of a combination of PPXS and E/P-XS, especially those containing over 95 wt% HCPP, cavitate more readily upon drawing than orientable polymer compositions of other polymer compositions. (Herein, wt% is relative to total polymer weight unless otherwise noted). As a result, the process of the present invention is able to induce a greater degree of cavitation and prepare an OPC of the present invention that has a lower density while also achieving an OPC having higher flexural modulus at a given density than other polypropylene OPCs. An OPC made from an orientable polymer composition according to the process of the present invention will have a combined amount of PPXS and E/P-XS, based on total polymer weight in the OPC, which is also 4 wt% or less.

The orientable polymer composition, as well as an OPC of the present invention, contains inorganic filler. Inorganic fillers are more desirable than organic fillers for numerous reasons including that inorganic fillers tend to be more thermally stable and resistant to decay and discoloration. Organic fillers, unlike inorganic fillers, also have a tendency to cause the color of a final OPC to fade over time when exposed to sunlight. The fillers exist dispersed within the orientable polymer composition and OPC.

Suitable inorganic fillers include mica, talc (including any or a combination of materials and grades commonly known and available as "talc"), chalk, titanium dioxide, clay, alumina, silica, glass beads, calcium carbonate, magnesium sulfate, barium sulfate, calcium oxysulfate, tin oxide, metal powder, glass powder, pigments, minerals, glass, ceramic, polymeric or carbon reinforcing agent fillers such as glass fibers, micas, talcs, carbon fibers, wollastonite, graphite, silica, magnesium carbonate, alumina, metal fibers, kaolin, silicon carbide, and glass flake. The inorganic filler can be, and desirably is, non-reactive inorganic filler. Non-reactive inorganic fillers do not react with water, in contrast to, for example, cemetitious materials. Unlike reactive fillers (fillers that react with water), non-reactive inorganic fillers offer stability both chemically and in terms of density when exposed to moisture.

Fillers can serve many purposes including serving to enhance flame retardancy, induce cavitation during the tensile drawing process, and provide partial reinforcement of OPC. Orientable polymer compositions and OPCs of the present invention typically contain ten volume-percent (vol%) or more, preferably 15 vol% or more, more preferably 20 vol% or more filler. Generally, the orientable polymer compositions and OPCs of the present invention contain 50 vol% or less, typically 40 vol% or less and more typically 35 vol% or less filler. The total filler can include organic filler, provided at least ten volume percent of the orientable polymer composition and OPC is inorganic filler. Desirably, all of the filler in the orientable polymer composition and OPC is inorganic filler, preferably non-reactive inorganic filler. Determine vol% filler based on total volume of the orientable polymer composition or OPC that the calculation pertains to.

The orientable polymer composition can be foamed to introduce a cellular structure prior to drawing. Foaming methods are known in the art (*see, for example*, USP 5,474,722 (incorporated herein by reference in its entirety), particularly column 12, line 18 to column 13, line 27). Preferably, the orientable polymer composition does not undergo foaming prior to drawing and a cellular structure in the final OPC arises as a result of cavitation during the drawing process.

Provide the orientable polymer composition at a drawing temperature in a range 0°C and 50°C below the softening temperature of the orientable polymer composition. The drawing temperature is preferably 30°C or less, more preferably 20°C or less and can be one °C or more, even five °C or more and preferably 10°C or more below the softening temperature of the orientable polymer composition. As such, the orientable polymer composition is in a solid state when at its drawing temperature.

Tensile draw the orientable polymer composition in its solid state to form an OPC. Any tensile method of drawing an orientable polymer composition is suitable for use in the present process including free drawing, solid state die drawing, roller drawing or any combination of these. Tensile drawing methods are necessary to induce cavitation during the drawing process.

Solid state die drawing is particularly desirable because a solid state die provides control over a final OPC shape and size. A solid state die drawing procedure requires feeding an orientable polymer composition into a converging shaping channel of a solid state drawing die and drawing the orientable polymer composition through the shaping channel using a tensile force. The drawing die can be at any temperature, but is desirably at a temperature equal to or below the softening temperature of the orientable polymer composition. Using a drawing die that is at a temperature greater than the softening temperature of the orientable polymer composition inhibits the ability to orient and cavitate the orientable polymer composition by melting the orientable polymer composition adjacent to the die, thereby lubricating polymer flow through the die.

It is generally desirable to cool the resulting cellular OPC after drawing to achieve dimensional stability and to lock in polymer orientation. Allowing the cellular OPC to relax orientation at a high temperature over time and after tension is relieved will cause the OPC to significantly diminish in flexural modulus. One way to cool an OPC is by merely exposing it to air or another gas, or by contacting it with cooling plates or other solid materials. It is desirable to cool the resulting cellular OPC by exposure it to a cooling liquid, such as water.

The OPC resulting from the process of the present invention is an OPC of the present invention. The OPC has a density of 0.85 grams per cubic centimeter (g/cc) or less, preferably 0.825 g/cc or less, more preferably 0.80 g/cc or less, still more preferably 0.775 g/cc or less, even more preferably 0.75 g/cc or less and most preferably 0.70 g/cc or less. Determine density according to ASTM method 792-00. The low density of the OPC is due to a cellular structure in the OPC.

The orientable composition can be cellular and remain cellular after drawing to produce a cellular OPC of the present invention. However, the orientable composition desirably undergoes cavitation during the drawing step to introduce cellular structure to the OPC during drawing. Cavitation is a spontaneous introduction of voids, cells or cavities in an orientable polymer composition during a drawing process. Cavitation produces voids or cavities dispersed throughout the entire orientable polymer composition upon tensile drawing. Cavitation typically occurs proximate to filler particles. Cavitation can occur in a cellular orientable composition or in an orientable composition that is free of voids or cavities (a "solid" orientable polymer composition). Hence, the voids or cavities in the cellular OPC of the present invention may be the result of foaming agent alone, cavitation alone, or a combination of foaming agent and cavitation.

The OPC desirably has a density that is lower than the orientable polymer composition prior to drawing as a result of cavitation. Notably, cavitation does not occur in extrusion methods (such as ram extrusion). Extrusion methods apply a positive pressure on a polymer by means of a compressive force. Cavitation requires a negative pressure that is associated with application of a tensile force. For a discussion on compressive versus tensile force on cavitation during polymer deformation see, for example: A. Pawlak and A. Galeski, PLASTIC DEFORMATION OF CRYSTALLINE POLYMERS: THE ROLE OF CAVITATION AND CRYSTAL PLASTICITY, Macromolecules, Vol. 38, 9688-9697 (2005).

Cellular OPCs of the present invention have a void volume of 30% or more, preferably 40% or more based on total OPC volume. The void volume can be entirely foamed void volume, entirely cavitated void volume or be a combination of foamed void volume and cavitated void volume. Desirably, at least 50%, preferably at least 75%, more preferably all of the void volume is cavitated void volume (that is, void volume arising due to cavitation during the tensile drawing process).

Determine percent void volume from density values. For example, determine total percent void volume by equation 1:

$$\% \text{ Void Volume} = (1 - ((\rho_{OPC})/(\rho_{\text{void-free orientable polymer composition}}))) \times 100\% \qquad (1)$$

where $\rho_{OPC}$ is the density of the OPC and $\rho_{\text{void-free orientable polymer composition}}$ is the combined density of all components in the orientable polymer composition (*that is,* the density of the orientable polymer composition if it was free of any voids).

Determine cavitation void volume by equation 2:

$$\% \text{ Cavitation Void Volume} = (1 - ((\rho_{OPC})/(\rho_{\text{orientable polymer composition}}))) \times 100\% \qquad (2)$$

where $\rho_{\text{orientable polymer composition}}$ is the density of the orientable polymer composition prior to drawing, regardless of whether there are voids present in the orientable polymer composition.

A surprising result of the present invention is that despite having a density of 0.85 g/cc or less and a void volume of 30 vol% or more, OPCs of the present invention have a flexural modulus of 4137 megaPascals (MPa) (600,000 pounds per square inch (psi)) or more, preferably 5516 MPa (800,000 psi) or more, and still more preferably 5861 MPa (850,000 psi) or more. For example, even with a density of 0.70 g/cc or less and a void volume (even when the void volume is entirely cavitated void volume) of 46% or more, the OPC of the present invention can have a flexural modulus of 6012 MPa (872,00 psi) or more. Measure flexural modulus according to ASTM method D-790-03.

The OPC of the present invention desirably is larger than fiber and film materials. In that regard, OPCs of the present invention desirably have cross sectional dimensions that all exceed three millimeters, preferably all exceed five millimeters, and all cross sectional dimensions can exceed 10 millimeters, 20 millimeters, 25 millimeters, even 50 millimeters. For avoidance of any doubt, the entire cavitated polymer cross sectional dimension is what these values refer to as opposed to a combination of cavitated polymer component laminated to a non-cavitated component. Hence, OPCs of the present invention are more complex than films and fibers by having larger cross sectional dimensions, by being a cellular structure and by containing at least 10 vol% inorganic filler.

The following examples serve to further illustrate embodiments of the present invention.

Examples

Prepare the present Examples and Comparative Examples by forming an orientable polymer composition into a billet and then tensile draw by solid state die drawing the billet into an OPC.

Pre-compound a mixture of polypropylene polymer and talc. The talc is a composition of 50-60 wt% talc and 40-50 wt% magnesium carbonates having a mean diameter of 16.4 microns (*for example,* TC-100 from Luzenac). The mixture is 46 wt% (22 vol%) talc and 54 wt% (78 vol%) polypropylene polymer. Form the mixture into pellets using an extruder. The present Examples and Comparative Examples explore numerous types and grades of polypropylene. See Table 1 for the types and grades of polypropylene polymer. See Table 2 to identify which polymer is in which particular Example and Comparative Example. The mixture constitutes an orientable polymer composition.

Table 1.

| Polymer[1] | Polymer Type | HCPP (y/n) | $T_s$ (°C) | Nucleated (y/n) | Mw/Mn | Melt Flow Rate (grams/10 minutes) | PPXS and E/P-XS[2] (wt%) |
|---|---|---|---|---|---|---|---|
| D207.02 | Homopolymer | Yes | 169 | Yes | 5 | 2.1 | 0.8 |
| D118.01 | Homopolymer | Yes | 168 | Yes | 5 | 8 | 0.8 |
| 5E12 | Homopolymer | Yes | 162 | No | 4 | 12 | 2.5 |
| 5A66V | Homopolymer | Yes | 161 | No | 6 | 4.1 | 3.5 |
| H700-12 | Homopolymer | Yes | 162 | No | 4 | 12 | 4.0 |
| 5D98 | Homopolymer | No | 160 | No | 4.7 | 3.2 | 5.3 |
| 5D37 | Homopolymer | No | 160 | No | 4.7 | 2.8 | 5.4 |
| D114 | Impact Copolymer | No | 165 | No | 4.5 | 0.4 | >4.0[3] |
| C104-01 | Impact Copolymer | No | 162 | No | 4.5 | 1.2 | >4.0[3] |
| C133-02 | Impact Copolymer | No | 162 | No | 5 | 2 | >4.0[3] |
| 7C50 | Impact Copolymer | No | 162 | No | 6 | 8 | >4.0[3] |
| D404.01 | Low Ethylene Random Copolymer | Yes | 163 | Yes | 5 | 3 | 1.3 |
| H110-02N | Low Ethylene Random Copolymer | No | 160 | Yes | 5 | 2 | 4.3 |
| 6D83K | Random | No | 148 | Yes | 4 | 1.9 | 5.7 |

(continued)

| Polymer[1] | Polymer Type | HCPP (y/n) | $T_s$ (°C) | Nucleated (y/n) | Mw/Mn | Melt Flow Rate (grams/10 minutes) | PPXS and E/P-XS[2] (wt%) |
|---|---|---|---|---|---|---|---|
| | Copolymer | | | | | | |
| 6D65L | Random Copolymer | No | 142 | No | 4 | 4 | 6.5 |
| DS 6D81 | Random Copolymer | No | 135 | No | 4 | 5 | 10.5 |
| R751-12N | Random Copolymer | No | 149 | Yes | 4 | 12 | 6.2 |
| R317-12RB | Random Copolymer | No | 142 | No | 3.3 | 12 | 6.5 |

[1] Polymers are available from The Dow Chemical Company.
[2] "PPXS and E/P-XS" refers to the combined weight percent of polypropylene xylene solubles and ethylene/propylene copolymer xylene solubles based on total polymer weight.
[3] Impact Copolymers have high PPXS and E/P-XS because the rubber component included to enhance impact performance is has a high level of E/P-XS.

Prepare a billet from the pellets of orientable polymer composition by feeding the pellets to an extruder, plasticating the pellets at a temperature of about 30°C above the softening temperature of the orientable polymer composition and extruding the plasticated orientable polymer composition through a rectangular billet die having dimensions of 5.08 centimeters (two inches) wide by 1.52 centimeters (0.6 inches) high. Feed the extruded orientable polymer composition through a calibrator having opening dimensions of 5.08 centimeters (two inches) by 1.52 centimeters (0.6 inches) to a haul off device (for example, belt puller) and haul-off the orientable polymer composition at a rate sufficient to neck the composition to a small enough dimension to fit through a solid state drawing die that will be used to draw down the billet in the next step and long enough extend through the solid state die to a drawing puller. Upon achieving sufficient length of necked down billet, progressively slow the haul-off rate to achieve a gradually larger cross sectional area for the billet until achieving the full 5.08 centimeter by 1.52 centimeter cross sectional dimension. When the billet reaches the full cross sectional dimension it contacts the walls of the calibrator, which smoothes the surface of the billet to a uniform rectangular shape. Cut the billet after achieving a length of billet having full cross sectional dimensions that is approximately four meters (13 feet) long. Repeat the process for each billet used in the Examples and Comparative Examples. The billets have negligible void volume. Therefore, any void volume in resulting OPCs is due to cavitation (that is, OPC void volume is cavitated void volume)

The solid state drawing die for use in the drawing process is a proportional drawing die, though a proportional drawing die is not necessary for the broadest scope of the process of the present invention. In a proportional drawing die the shaping channel walls define a polymer composition drawing path extending from the entrance opening to the exit opening in which all cross sections of polymer composition have substantially proportional non-circular cross section shape and have a centroid lying on a substantially straight line ("centroid line") extending parallel to the drawing direction. All cross sections of the shaping channel are proportional to one another and the shaping channel walls continually taper towards a centroid line through the shaping channel. The shaping channel wall on the "sides" of the shaping channel (corresponding to the 1.52 centimeter dimension of the initial billet) taper towards a centroid line of the shaping channel at a 15° angle. The shaping channel walls on the "top" and "bottom" of the shaping channel (corresponding to the 5.08 centimeter dimension of the initial billet) taper towards the centroid line of the shaping channel at a 4.6° angle.

Draw each billet through the solid state drawing die to form an OPC. Feed the narrow portion of the billet through the drawing die, through a 23°C water spray tank that is 1.5 meters (five feet) long and to a billet puller. Condition each billet to a drawing temperature ($T_d$) and set the drawing die to the $T_d$. The $T_d$ is 15°C below the softening temperature of the polymer composition comprising the billet. Maintain the billet prior to the drawing die and the drawing die at the drawing temperature throughout the drawing process. Draw the billet through the drawing die by gradually increasing the rate (drawing rate) at which the billet puller moves the billet through the drawing die until achieving a drawing rate of 5.8 meters (19 feet) per minute. Increase the drawing rate gradually enough to avoid breaking the OPC exiting the drawing die. During the drawing process, the billet undergoes cavitation as it undergoes orientation. The resulting OPC is either an Example ("Ex") or Comparative Example ("Comp Ex"), depending on the polymer in the OPC (See Table 2). The resulting OPCs have rectangular cross sections having dimensions of approximately 2.54 centimeters by 0.76 centimeters. Actual dimensions for each sample can be calculated from the starting dimensions (5.08 centimeters wide and 1.52 centimeters thick) and area draw ratio from Table 2, realizing the final cross sectional shape is proportional to the starting cross sectional shape.

Cut portions of the resulting OPC drawn at the drawing rate of 5.8 meters per minute into test samples to determine density and flexural modulus. Table 2 contains the properties for OPCs of the polymers in Table 1.

Table 2.

| Sample | Polymer | Axial Draw Ratio[1] | Area Draw Ratio[2] | Cavitation Void Volume (% of total OPC volume) | Density (g/cc) | Flexural Modulus (psi) | Flexural Modulus-to-Density ratio (x 10[6]) |
|---|---|---|---|---|---|---|---|
| Ex 1 | D207.02 | 10 | 6.32 | 42.0 | 0.76 | 825,000 | 1.09 |
| Ex 2 | D118.01 | 12.1 | 6.48 | 47.7 | 0.70 | 872,000 | 1.25 |
| Ex 3 | 5E12 | 9.25 | 5.71 | 39.7 | 0.79 | 681,000 | 0.86 |
| Ex 4 | 5A66V | 11 | 5.74 | 42.7 | 0.75 | 706,000 | 0.94 |
| Ex 5 | H700-12 | 8.38 | 5.8 | 37.4 | 0.82 | 661,000 | 0.81 |
| Ex 6 | D404.01 | 8.63 | 4.97 | 37.4 | 0.82 | 641,000 | 0.78 |
| Comp Ex A | 5D98 | 8 | 5.35 | 33.6 | 0.87 | 603,000 | 0.69 |
| Comp Ex B | 5D37 | 7.63 | 5.59 | 32.8 | 0.88 | 600,000 | 0.68 |
| Comp Ex C | D114 | 6.7 | 4.4 | 27.1 | 0.955 | 371,000 | 0.39 |
| Comp Ex D | C104-01 | 7.5 | 5.27 | 37.4 | 0.82 | 482,000 | 0.58 |
| Comp Ex E | C133-02 | 8.75 | 6.61 | 35.9 | 0.84 | 535,000 | 0.64 |
| Comp Ex F | 7C50 | 10.6 | 6.18 | 36.6 | 0.83 | 466,000 | 0.56 |
| Comp Ex G | H110-02N | 7 | 4.35 | 29.8 | 0.92 | 626,000 | 0.68 |
| Comp Ex H | 6D83K | 10.5 | 4.39 | 19.8 | 1.05 | 444,000 | 0.44 |
| Comp Ex I | 6D65L | 11.2 | 4.19 | 23.7 | 1.00 | 398,000 | 0.40 |
| Comp Ex J | DS 6D81 | 5.75 | 3.93 | 19.1 | 1.06 | 325,000 | 0.32 |
| Comp Ex K | R751-12N | 10.5 | 4.43 | 17.6 | 1.08 | 452,000 | 0.45 |
| Comp Ex L | R317-12RB | 10 | 4.1 | 23.7 | 1.00 | 466,000 | 0.47 |

[1] Axial Draw Ratio is also known as linear draw ratio. Determine axial draw ratio by drawing two lines perpendicular to drawing direction and spaced 5.08 centimeters apart on a billet, measure the spacing of the lines in centimeters after drawing and divide by 5.08 cm. That ratio is the axial draw ratio.
[2] Area Draw Ratio is the ratio of the cross sectional area of the billet cross sectional to the cross sectional area of the OPC.

Examples 1-6 illustrate OPCs containing 100 wt% HCPP based on total polymer weight in the OPC.
The Samples further illustrate that reducing the PPXS within a type of polypropylene polymer improves the flexural modulus at a given density, with HCPPs having particularly high flexural modulus even at especially low densities. Most dramatic results providing high modulus at low density occur when PPXS is less than one wt% (Exs 1 and 2). This is a surprising result since decreasing density typically causes a reduction in flexural modulus, but that is not the case with HCPPs in OPCs from a tensile drawing process.

The Samples also illustrate that OPCs containing greater than 95 wt% HCPP (based on polymer composition) have a higher flexural modulus-to-density ratio than OPCs containing more conventional polypropylenes.

Moreover, the Samples illustrate that greater cavitation void volume is achievable under similar drawing conditions when drawing an orientable polymer composition of HCPP.

A comparison of Ex 4 to Ex 3 illustrates that a broad molecular weight distribution increases flexural modulus and decreases density (increases cavitation void volume). Ex 3 has lower XS, which should result in a higher flexural modulus and lower density than Ex 4. However, Ex 4 has a broad molecular weight distribution (Mw/Mn= six) and Ex 3 does not.

Exs 1 and 2 illustrate the effect of nucleator on flexural modulus and density. Of all the Exs, only Exs 1 and 2 are nucleated homopolymer and they each have a markedly higher flexural modulus than the other Examples of homopolymer. They also have densities equal to or lower than the other Exs.

## Claims

1. A cellular oriented polymer composition comprising one or more orientable polymer and having a density of 0.85 grams per cubic centimeter or less, a flexural modulus of 4137 megaPascals (600,000 pounds per square inch) or more and all cross sectional dimensions of three millimeters or greater, wherein the cellular oriented polymer composition comprises 50 weight-percent or more polypropylene-based polymers and four weight-percent or less of a combination of polypropylene xylene solubles and ethylene/propylene copolymer xylene solubles with weight-percent based on total polymer weight in the cellular oriented polymer composition and ten or more volume-percent inorganic filler based on total cellular oriented polymer composition volume.

2. The cellular oriented polymer composition of Claim 1, wherein the polypropylene-based polymers have a molecular weight distribution of six or less.

3. The cellular oriented polymer composition of Claim 1, wherein the polypropylene-based polymers are nucleated homopolymers.

4. The cellular oriented polymer composition of Claim 1, wherein filler accounts for 20 volume percent or more of the total cavitated oriented polymer composition volume.

5. The cellular oriented polymer composition of Claim 1, wherein all of the filler in the oriented polymer composition is inorganic.

6. The cellular oriented polymer composition of Claim 1, wherein the oriented polymer composition has one percent by weight or less of a combination of polypropylene xylene solubles and ethylene/propylene copolymer xylene solubles based on total weight of polymer in the cellular oriented polymer composition.

7. The cellular oriented polymer composition of Claim 1, wherein the cellular oriented polymer composition contains four weight-percent or less of a combination of polypropylene xylene solubles and ethylene/propylene copolymer xylene solubles with weight-percent based on total polypropylene weight in the cellular oriented polymer composition.

8. A process for preparing a cellular oriented polymer composition comprising the steps:

   (a) providing an orientable polymer composition having a softening temperature and at a drawing temperature between 0°C and 50°C below its softening temperature;
   (b) tensile drawing the orientable polymer composition thereby inducing orientation of the orientable polymer composition to form a cellular oriented polymer composition; and
   (c) cooling the cellular oriented polymer composition;

   wherein the orientable polymer composition and oriented polymer composition have 50 weight-percent or more polypropylene-based polymers and four weight-percent or less of a combination of polypropylene xylene solubles and ethylene/propylene copolymer xylene solubles based on total weight of polymer in the orientable polymer composition and cellular oriented polymer composition, and wherein the cellular oriented polymer composition has an inorganic filler content of ten or more volume percent based on total orientable polymer composition volume, a density of 0.85 grams per cubic centimeter or less and a flexural modulus of 4137 megaPascals (600,000 pounds per square inch) or more.

9. The process of Claim 8, wherein the polypropylene-based polymer is selected from a group of polypropylene-based polymers consisting of polypropylene-based polymers having a molecular weight distribution of six or less, polypropylene-based homopolymers that are nucleated, and polypropylene-based homopolymers both having a molecular weight distribution of six or less and that is nucleated.

10. The process of Claim 8, wherein drawing in step (b) induces cavitation in the cellular oriented polymer composition.

11. The process of Claim 10, wherein the orientable polymer composition in step (a) is free of cells, cavities and voids.

12. The process of Claim 8, wherein the orientable polymer composition and cellular oriented polymer composition have one percent by weight or less of a combination of polypropylene xylene solubles and ethylene/propylene copolymer xylene solubles based on total polymer weight.

13. The process of Claim 8, wherein all cross sectional dimensions of the cellular oriented polymer composition are three millimeters or more.

14. The process of Claim 8, wherein the orientable polymer composition and cellular oriented polymer composition each contains four weight-percent or less of a combination of polypropylene xylene solubles and ethylene/propylene copolymer xylene solubles with weight-percent based on total polypropylene weight in the composition being analyzed.

**Patentansprüche**

1. Zellulare ausgerichtete Polymerzusammensetzung, die ein oder mehrere ausrichtbare Polymere umfasst und eine Dichte von 0,85 g/cm$^3$ oder weniger, einen Biegemodul von 4137 MPa (600.000 psi) oder mehr und Querschnittsabmessungen von insgesamt 3 mm oder mehr hat, wobei die zellulare ausgerichtete Polymerzusammensetzung 50 Gew.-% oder mehr polypropylenbasierte Polymere und 4 Gew.-% oder weniger einer Kombination von xylollöslichen Anteilen von Polypropylen und xylollöslichen Anteilen von Ethylen/Propylen-Copolymeren umfasst, wobei die Gewichtsprozent auf das Polymergesamtgewicht in der zellularen ausgerichteten Polymerzusammensetzung bezogen sind, sowie 10 Vol.-% oder mehr an anorganischem Füllstoff, bezogen auf das Gesamtvolumen der zellularen ausgerichteten Polymerzusammensetzung.

2. Zellulare ausgerichtete Polymerzusammensetzung nach Anspruch 1, wobei die polypropylenbasierten Polymere eine Molekulargewichtsverteilung von 6 oder weniger haben.

3. Zellulare ausgerichtete Polymerzusammensetzung nach Anspruch 1, wobei die polypropylenbasierten Polymere nukleierte Homopolymere sind.

4. Zellulare ausgerichtete Polymerzusammensetzung nach Anspruch 1, wobei der Füllstoff 20 Vol.-% oder mehr des Gesamtvolumens der kavitierten ausgerichteten Polymerzusammensetzung ausmacht.

5. Zellulare ausgerichtete Polymerzusammensetzung nach Anspruch 1, wobei der gesamte Füllstoff in der ausgerichteten Polymerzusammensetzung anorganisch ist.

6. Zellulare ausgerichtete Polymerzusammensetzung nach Anspruch 1, wobei die ausgerichtete Polymerzusammensetzung 1 Gew.-% oder weniger einer Kombination von xylollöslichen Anteilen von Polypropylen und xylollöslichen Anteilen von Ethylen/Propylen-Copolymeren aufweist, bezogen auf das Gesamtgewicht an Polymer in der zellularen ausgerichteten Polymerzusammensetzung.

7. Zellulare ausgerichtete Polymerzusammensetzung nach Anspruch 1, wobei die zellulare ausgerichtete Polymerzusammensetzung 4 Gew.-% oder weniger einer Kombination von xylollöslichen Anteilen von Polypropylen und xylollöslichen Anteilen von Ethylen/Propylen-Copolymeren enthält, wobei die Gewichtsprozent auf das Polypropylengesamtgewicht in der zellularen ausgerichteten Polymerzusammensetzung bezogen sind.

8. Verfahren zur Herstellung einer zellularen ausgerichteten Polymerzusammensetzung, mit den folgenden Schritten:

(a) Bereitstellen einer ausrichtbaren Polymerzusammensetzung mit einer Erweichungstemperatur und einer Ziehtemperatur zwischen 0°C und 50°C unter ihrer Erweichungstemperatur;
(b) Ziehen der ausrichtbaren Polymerzusammensetzung, wodurch die ausrichtbare Polymerzusammensetzung dahingehend ausgerichtet wird, dass eine zellulare ausgerichtete Polymerzusammensetzung entsteht; und
(c) Abkühlen der zellularen ausgerichteten Polymerzusammensetzung;

wobei die ausrichtbare Polymerzusammensetzung und die ausgerichtete Polymerzusammensetzung 50 Gew.-% oder mehr an polypropylenbasierten Polymeren und 4 Gew.-% oder weniger einer Kombination von xyllolöslichen Anteilen von Polypropylen und xyllolöslichen Anteilen von Ethylen/Propylen-Copolymeren aufweisen, bezogen auf das Gesamtgewicht an Polymer in der ausrichtbaren Polymerzusammensetzung und der zellularen ausgerichteten Polymerzusammensetzung, und wobei die zellulare ausgerichtete Polymerzusammensetzung einen Gehalt an anorganischem Füllstoff von 10 Vol.- % oder mehr, bezogen auf das Gesamtvolumen der ausrichtbaren Polymerzusammensetzung, eine Dichte von 0,85 g/cm$^3$ oder weniger und einen Biegemodul von 4137 MPa (600.000 psi) oder mehr hat.

9. Verfahren nach Anspruch 8, wobei das polypropylenbasierte Polymer aus einer Gruppe von polypropylenbasierten Polymeren ausgewählt ist, die aus polypropylenbasierten Polymeren mit einer Molekulargewichtsverteilung von 6 oder weniger, polypropylenbasierten Homopolymeren, die nukleiert sind, und polypropylenbasierten Homopolymeren, die sowohl eine Molekulargewichtsverteilung von 6 oder weniger haben als auch nukleiert sind, besteht.

10. Verfahren nach Anspruch 8, wobei das Ziehen in Schritt (b) die Bildung von Hohlräumen in der zellularen ausgerichteten Polymerzusammensetzung verursacht.

11. Verfahren nach Anspruch 10, wobei die ausrichtbare Polymerzusammensetzung in Schritt (a) frei von Zellen, Hohlräumen und Poren ist.

12. Verfahren nach Anspruch 8, wobei die ausrichtbare Polymerzusammensetzung und die zellulare ausgerichtete Polymerzusammensetzung 1 Gew.-% oder weniger einer Kombination von xyllolöslichen Anteilen von Polypropylen und xyllolöslichen Anteilen von Ethylen/Propylen-Copolymeren aufweisen, bezogen auf das Polymergesamtgewicht.

13. Verfahren nach Anspruch 8, wobei alle Querschnittsabmessungen der zellularen ausgerichteten Polymerzusammensetzung 3 mm oder mehr betragen.

14. Verfahren nach Anspruch 8, wobei die ausrichtbare Polymerzusammensetzung und die zellulare ausgerichtete Polymerzusammensetzung jeweils 4 Gew.-% oder weniger einer Kombination von xyllolöslichen Anteilen von Polypropylen und xyllolöslichen Anteilen von Ethylen/Propylen-Copolymeren enthält, wobei die Gewichtsprozent auf das Polypropylengesamtgewicht in der analysierten Zusammensetzung bezogen sind.

## Revendications

1. Composition de polymère orienté alvéolaire comprenant un ou plusieurs polymères orientables et présentant une masse volumique égale ou inférieure à 0,85 g/cm$^3$, un module de flexion égal ou supérieur à 4137 MPa (600 000 livres par pouce carré), et des dimensions de section transversale valant toutes au moins 3 mm, laquelle composition de polymère orienté alvéolaire comprend 50 % en poids ou plus de polymères à base de polypropylène et 4 % en poids ou moins, au total, de fraction de polypropylène soluble dans du xylène et de fraction de copolymère d'éthylène et de propylène soluble dans du xylène, ces pourcentages en poids étant rapportés au poids total de polymère dans la composition de polymère orienté alvéolaire, ainsi que 10 % ou plus de charge inorganique, en volume rapporté au volume total de la composition de polymère orienté alvéolaire.

2. Composition de polymère orienté alvéolaire conforme à la revendication 1, dans laquelle les polymères à base de polypropylène présentent un indice de distribution des masses moléculaires égal ou inférieur à 6.

3. Composition de polymère orienté alvéolaire conforme à la revendication 1, dans laquelle les polymères à base de polypropylène sont des homopolymères contenant un agent de nucléation.

4. Composition de polymère orienté alvéolaire conforme à la revendication 1, dans laquelle la charge représente au moins 20 % du volume total de la composition de polymère orienté après cavitation.

5. Composition de polymère orienté alvéolaire conforme à la revendication 1, dans laquelle toute la charge présente dans la composition de polymère orienté est inorganique.

6. Composition de polymère orienté alvéolaire conforme à la revendication 1, laquelle composition de polymère orienté contient au plus 1 %, au total, de fraction de polypropylène soluble dans du xylène et de fraction de copolymère d'éthylène et de propylène soluble dans du xylène, en poids rapporté au poids total de polymère dans la composition de polymère orienté alvéolaire.

7. Composition de polymère orienté alvéolaire conforme à la revendication 1, laquelle composition de polymère orienté alvéolaire contient au plus 4 %, au total, de fraction de polypropylène soluble dans du xylène et de fraction de copolymère d'éthylène et de propylène soluble dans du xylène, en poids rapporté au poids total de polypropylène contenu dans la composition de polymère orienté alvéolaire.

8. Procédé de préparation d'une composition de polymère orienté alvéolaire lequel procédé comporte les étapes suivantes :

   a) prendre une composition de polymère orientable présentant une certaine température de ramollissement, à une température d'étirage inférieure de 0 à 50 °C à sa température de ramollissement ;
   b) étirer par traction la composition de polymère orientable, ce qui provoque l'orientation de cette composition de polymère orientable pour en faire une composition de polymère orienté alvéolaire ;
   c) et refroidir cette composition de polymère orienté alvéolaire ;

   et dans lequel procédé la composition de polymère orientable et la composition de polymère orienté comprennent 50 % en poids ou plus de polymères à base de polypropylène et 4 % en poids ou moins, au total, de fraction de polypropylène soluble dans du xylène et de fraction de copolymère d'éthylène et de propylène soluble dans du xylène, ces pourcentages en poids étant rapportés au poids total de polymère dans la composition de polymère orientable ou la composition de polymère orienté alvéolaire, laquelle composition de polymère orienté alvéolaire présente une teneur en charge inorganique de 10 % ou plus, en volume rapporté au volume total de la composition de polymère orientable, ainsi qu'une masse volumique égale ou inférieure à 0,85 g/cm$^3$ et un module de flexion égal ou supérieur à 4137 MPa (600 000 livres par pouce carré).

9. Procédé conforme à la revendication 8, dans lequel le polymère à base de polypropylène est choisi dans un ensemble de polymères à base de polypropylène formé par les polymères à base de polypropylène qui présentent un indice de distribution des masses moléculaires égal ou inférieur à 6, les homopolymères à base de polypropylène qui contiennent un agent de nucléation, et les homopolymères à base de polypropylène qui à la fois présentent un indice de distribution des masses moléculaires égal ou inférieur à 6 et contiennent un agent de nucléation.

10. Procédé conforme à la revendication 8, dans lequel l'étirage de l'étape (b) provoque la formation de cavités dans la composition de polymère orienté alvéolaire.

11. Procédé conforme à la revendication 10, dans lequel la composition de polymère orientable prise dans l'étape (a) ne contient ni alvéoles, ni cavités, ni vides.

12. Procédé conforme à la revendication 8, dans lequel la composition de polymère orientable et la composition de polymère orienté alvéolaire comprennent au plus 1 % au total, en poids rapporté au poids total de polymère, de fraction de polypropylène soluble dans du xylène et de fraction de copolymère d'éthylène et de propylène soluble dans du xylène.

13. Procédé conforme à la revendication 8, dans lequel toutes les dimensions de section transversale de la composition de polymère orienté alvéolaire valent au moins 3 mm.

14. Procédé conforme à la revendication 8, dans lequel la composition de polymère orientable et la composition de polymère orienté comprennent chacune 4 % en poids ou moins, au total, de fraction de polypropylène soluble dans du xylène et de fraction de copolymère d'éthylène et de propylène soluble dans du xylène, ce pourcentage en poids étant rapporté au poids total de polypropylène dans la composition analysée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61019616 A
- US 7282539 B
- US P7282539 B
- US P5474722 A
- US P7087680 B

### Non-patent literature cited in the description

- **A. Pawlak ; A. Galeski.** PLASTIC DEFORMATION OF CRYSTALLINE POLYMERS: THE ROLE OF CAVITATION AND CRYSTAL PLASTICITY. *Macromolecules,* 2005, vol. 38, 9688-9697